(19) Europäisches Patentamt

European Patent Office

Office européen des brevets

(11) **EP 4 293 469 B1**

(12) **FASCICULE DE BREVET EUROPEEN**

(45) Date de publication et mention de la délivrance du brevet:
**24.09.2025 Bulletin 2025/39**

(21) Numéro de dépôt: **23179513.9**

(22) Date de dépôt: **15.06.2023**

(51) Classification Internationale des Brevets (IPC):
**G05D 1/00** *(2024.01)* **G05D 1/695** *(2024.01)*
**G05D 109/22** *(2024.01)*

(52) Classification Coopérative des Brevets (CPC):
**G05D 1/104; G05D 1/695;** G05D 2109/22

(54) **PROCÉDÉ DE GESTION DE LA POSITION LONGITUDINALE D'UN AÉRONEF SUIVEUR PAR RAPPORT A UN AÉRONEF MENEUR**

VERFAHREN ZUR STEUERUNG DER RELATIVEN POSITION EINES FOLGENDEN FLUGZEUGS BEZUGLICH EINES LEADER FLUGZEUGS

METHOD FOR MANAGING RELATIVE LONGITUDINAL POSITION OF A FOLLOWER AIRCRAFT WITH RESPECT TO A LEADER AIRCRAFT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **15.06.2022 FR 2205802**

(43) Date de publication de la demande:
**20.12.2023 Bulletin 2023/51**

(73) Titulaire: **Airbus SAS**
**31700 Blagnac (FR)**

(72) Inventeurs:
• **ADAMS, Jordan Lee**
**31060 TOULOUSE (FR)**
• **TA, Guillaume**
**31060 TOULOUSE (FR)**
• **FROT, Clément**
**31060 TOULOUSE (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A2- 2 442 201**

• **CHEN QINGYANG ET AL: "UAVs formation flight control based on following of the guidance points", 2016 IEEE CHINESE GUIDANCE, NAVIGATION AND CONTROL CONFERENCE (CGNCC), IEEE, 12 August 2016 (2016-08-12), pages 730 - 735, XP033049209, DOI: 10.1109/ CGNCC.2016.7828876**
• **BEN YUN ET AL: "A leader-follower formation flight control scheme for UAV helicopters", AUTOMATION AND LOGISTICS, 2008. ICAL 2008. IEEE INTERNATIONAL CONFERENCE ON, IEEE, PISCATAWAY, NJ, USA, 1 September 2008 (2008-09-01), pages 39 - 44, XP031329608, ISBN: 978-1-4244-2502-0**

EP 4 293 469 B1

## Description

### DOMAINE TECHNIQUE

L'invention concerne le domaine des vols en formation, et concerne plus particulièrement le domaine de la gestion de la position longitudinale d'un aéronef suiveur par rapport à un aéronef meneur.

### ETAT DE LA TECHNIQUE ANTERIEURE

Il est connu de faire voler des aéronefs en formation pour économiser de l'énergie.

Ainsi, à titre d'exemple, lors d'une démonstration effectuée par le déposant, deux aéronefs ont effectué un vol de Toulouse à Montréal en volant en formation. Dans cette formation, deux aéronefs se suivaient, un aéronef meneur dirigeait la formation et un aéronef suiveur suivait l'aéronef meneur en se positionnant dans le sillage ascendant de l'aéronef meneur. Il a été démontré que ce vol en formation avait permis d'économiser plus de six tonnes d'émissions de dioxyde de carbone et avait permis d'économiser plus de 5% de carburant pour l'aéronef suiveur, par rapport à un même vol d'un aéronef seul.

Le vol en formation implique de pouvoir gérer en permanence la position longitudinale de l'aéronef suiveur par rapport à l'aéronef meneur.

D'une manière connue, la gestion de la position longitudinale de l'aéronef suiveur est effectuée en utilisant un calcul de consigne en vitesse avec des retours en position longitudinale et vitesse. Ce calcul se traduit comme suit : la consigne de vitesse est égale à la vitesse de l'aéronef meneur plus la distance entre l'aéronef meneur et l'aéronef suiveur pondérée par un premier coefficient de gain, plus la différence de vitesse entre l'aéronef meneur et l'aéronef suiveur pondérée par un deuxième coefficient de gain.

Ce calcul conduit nécessairement à des variations de la consigne de vitesse du fait de l'évolution des termes permettant le calcul de la distance entre l'aéronef meneur et l'aéronef suiveur, et l'évolution des termes permettant le calcul de la différence de vitesse.

La variation de consigne est ensuite transmise au sein de la chaine de commande de poussée et conduit à une variation des consignes de poussée moteur de l'aéronef suiveur, notamment en croisière. Il en résulte que ce type de variation peut dégrader le confort des passagers, il est donc souhaitable d'éviter de telles variations.

La demande de brevet EP 2 442 201A2 décrit un procédé de détermination d'une loi de commande de la vitesse d'un aéronef suiveur volant en formation derrière un aéronef meneur. Le document " UAVs formation flight control based on followings of the guidance points" traite d'une stratégie de vol en formation pour des aéronefs sans pilote.

Dans ce contexte, il est souhaitable de fournir un procédé de gestion de la position longitudinale d'un aéronef suiveur suivant un aéronef meneur dans un vol en formation, qui permette de réduire les fluctuations de consigne de vitesse pour ainsi améliorer le confort des passagers.

### EXPOSE DE L'INVENTION

A cet effet, il est proposé un procédé de gestion de la position longitudinale d'au moins un aéronef suiveur suivant un aéronef meneur dans un vol en formation, le procédé étant caractérisé en ce qu'il comprend au moins les étapes suivantes :

(a) obtention d'une position de l'aéronef meneur, d'une position longitudinale réelle $Xr$ de l'aéronef suiveur, d'une vitesse $Sl$ de l'aéronef meneur et d'une vitesse $Sf$ de l'aéronef suiveur ;

(b) détermination d'une position longitudinale ciblée $Xt$ de l'aéronef suiveur par rapport à la position longitudinale de l'aéronef meneur ;

(c) calcul d'une différence $Xt-Xr$ entre la position longitudinale ciblée $Xt$ de l'aéronef suiveur par rapport à l'aéronef meneur et la position longitudinale réelle $Xr$ obtenue de l'aéronef suiveur par rapport à l'aéronef meneur ;

(d) comparaison de la valeur de la différence $Xt-Xr$ avec au moins un seuil prédéfini ;

(e) choix d'une loi de commande $SCf$ de la vitesse $Sf$ de l'aéronef suiveur, parmi au moins deux lois de commande $SCf$ distinctes, en fonction de la comparaison ;

(f) application de la loi de commande $SCf$ choisie pour gérer la position longitudinale réelle $Xr$ de l'aéronef suiveur par rapport à la position de l'aéronef meneur,

le procédé est tel que le choix de la loi de commande $SCf$ est effectué comme suit :

- si la différence $Xt-Xr$ entre la position longitudinale réelle $Xr$ obtenue de l'aéronef suiveur par rapport à l'aéronef meneur et la position longitudinale ciblée $Xt$ obtenue de l'aéronef suiveur par rapport à l'aéronef meneur est comprise dans un intervalle de valeurs entre un premier seuil $Th1$ prédéfini et un deuxième seuil $Th2$ prédéfini, avec $Th1+Xt < Xt < Th2+Xt$ avec $Th1$ négatif et $Th2$ positif, alors la loi de commande $SCf$ choisie est définie par : $SC_f = S_l$ ;

- si la différence $Xt-Xr$ entre la position longitudinale réelle $Xr$ obtenue de l'aéronef suiveur par rapport à l'aéronef meneur et la position longitudinale ciblée $Xt$ de l'aéronef suiveur par rapport à l'aéronef meneur est comprise dans un intervalle de valeurs entre le premier seuil $Th1$ prédéfini et un troisième seuil $Th3$ prédéfini, avec $Th3+Xt < Thl+Xt < Xt$ avec $Th3$ négatif, alors la loi de commande SCf choisie est définie par : $SC_f = S_l + O_f$, au moins jusqu'à ce que la position longitudinale réelle Xr obtenue de l'aéronef suiveur soit supérieure à un quatrième seuil Th4 prédéfini, avec Th1≤Th4≤Xt avec Th4 négatif ;

- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est inférieure au troisième seuil Th3 prédéfini, alors la loi de commande SCf choisie est définie par : $SC_f = S_l + K_1 . (X_r - X_t) + K_2 . (S_l - S_f)$ jusqu'à ce que la position longitudinale réelle Xr obtenue de l'aéronef suiveur par rapport à l'aéronef meneur soit supérieure au quatrième seuil Th4 prédéfini ;

- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est comprise dans un intervalle de valeurs entre le deuxième seuil Th2 prédéfini et un sixième seuil Th6 prédéfini, avec Xt<Th2+Xt<Th6+Xt avec Th6 positif, alors la loi de commande choisie est définie par : $SC_f = S_l + O_b$ au moins jusqu'à ce que la position longitudinale réelle Xr obtenue de l'aéronef suiveur soit inférieure à un cinquième seuil Th5 prédéfini, avec Th2≥Th5≥Xt avec Th5 positif ;

- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est supérieure au sixième seuil Th6 prédéfini, alors la loi de commande choisie est définie par : $SC_f = S_l + K_1 . (X_r - X_t) + K_2 . (S_l - S_f)$ jusqu'à ce que la position longitudinale réelle Xr obtenue de l'aéronef suiveur par rapport à l'aéronef meneur soit inférieure au cinquième seuil Th5 prédéfini ;

avec $O_f$ une constante positive prédéterminée, $K_1$ un premier coefficient de gain prédéfini, $K_2$ un deuxième coefficient de gain prédéfini, et $O_b$ une constante négative prédéterminée.

Ainsi, grâce à la définition d'au moins un seuil et au choix d'une loi de commande de la vitesse de l'aéronef suiveur, parmi au moins deux lois de commande distinctes, en fonction de la comparaison par rapport audit au moins un seuil, la gestion de la vitesse de l'aéronef suiveur est effectuée par paliers, ce qui évite des accélérations ou des décélérations parasitaires, ce qui permet un pilotage plus confortable pour des passagers de l'aéronef suiveur. En d'autres termes, le procédé proposé permet de gérer la position longitudinale d'un aéronef suiveur suivant un aéronef meneur dans un vol en formation, et permet de réduire les fluctuations de consigne de vitesse pour ainsi améliorer le confort des passagers.

Selon une disposition particulière, le premier seuil Th1, le deuxième seuil Th2, le quatrième seuil Th4 et le cinquième seuil Th5 sont définis par l'inégalité :

$$Th1 < Th4 < Xt < Th5 < Th2.$$

Selon une disposition particulière, la loi de commande est conservée inchangée si $|SC_f - PSC_f| < L_S$ avec $SC_f$ une commande de vitesse de l'aéronef suiveur (Af), $PSC_f$ une précédente commande de vitesse de l'aéronef suiveur et $L_S$ un seuil de vitesse prédéfini.

Selon une disposition particulière, un filtre de Kalman est appliqué sur la valeur de la différence entre la vitesse obtenue SI de l'aéronef meneur et la vitesse Sf de l'aéronef suiveur, pour estimer un biais relatif sur la vitesse obtenue de l'aéronef meneur.

Selon une disposition particulière, une vitesse de l'aéronef meneur est déterminée en combinant des basses fréquences d'une mesure d'un nombre de mach de l'aéronef meneur et des hautes fréquences d'une vitesse de l'aéronef meneur par rapport au sol.

Selon un autre aspect, il est proposé un produit programme d'ordinateur comprenant des instructions de code de programme pour exécuter le procédé de gestion, lorsque lesdites instructions sont exécutées par un processeur.

Selon un autre aspect, il est proposé un support de stockage non transitoire sur lequel est stocké un programme d'ordinateur comprenant des instructions de code de programme pour exécuter le procédé de gestion, lorsque lesdites instructions sont lues depuis ledit support de stockage non transitoire et exécutées par un processeur.

Selon un autre aspect, il est proposé un système informatique comprenant de la circuiterie électronique configurée pour implémenter une gestion de la position longitudinale d'au moins un aéronef suiveur suivant un aéronef meneur dans un vol en formation, la circuiterie électronique implémentant au moins les étapes suivantes :

(a) obtention d'une position de l'aéronef meneur, d'une position longitudinale réelle Xr de l'aéronef suiveur par rapport à l'aéronef meneur, d'une vitesse SI de l'aéronef meneur et d'une vitesse Sf de l'aéronef suiveur ;

(b) détermination d'une position longitudinale ciblée Xt de l'aéronef suiveur par rapport à la position longitudinale de l'aéronef meneur ;

(c) calcul d'une différence Xt-Xr entre la position longitudinale ciblée Xt de l'aéronef suiveur par rapport à l'aéronef meneur et la position longitudinale réelle Xr obtenue de l'aéronef suiveur par rapport à l'aéronef meneur ;

(d) comparaison de la valeur de la différence Xt-Xr avec au moins un seuil prédéfini;

(e) choix d'une loi de commande de la vitesse de

l'aéronef suivant, parmi au moins deux lois de commande distinctes, en fonction de la comparaison ;

(f) application de la loi de commande choisie pour gérer la position longitudinale réelle Xr de l'aéronef suiveur par rapport à la position de l'aéronef meneur,

le système étant caractérisé en ce que le choix de la loi de commande SCf est effectué comme suit :

- si la différence Xt-Xr entre la position longitudinale réelle Xr obtenue de l'aéronef suiveur par rapport à l'aéronef meneur et la position longitudinale ciblée Xt obtenue de l'aéronef suiveur par rapport à l'aéronef meneur est comprise dans un intervalle de valeurs entre un premier seuil Th1 prédéfini et un deuxième seuil Th2 prédéfini, avec Th1+Xt <Xt<Th2+Xt avec Th1 négatif et Th2 positif, alors la loi de commande SCf choisie est définie par : $SC_f = S_l$ ;
- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est comprise dans un intervalle de valeurs entre le premier seuil Th1 prédéfini et un troisième seuil Th3 prédéfini, avec Th3+Xt <Thl+Xt<Xt avec Th3 négatif, alors la loi de commande SCf choisie est définie par : $SC_f = S_l + O_f$, au moins jusqu'à ce que la position longitudinale réelle Xr obtenue de l'aéronef suiveur soit supérieure à un quatrième seuil Th4 prédéfini, avec Th1≤Th4≤Xt avec Th4 négatif ;
- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est inférieure au troisième seuil Th3 prédéfini, alors la loi de commande SCf choisie est définie par : $SC_f = S_l + K_1 . (X_r - X_t) + K_2 . (S_l - S_f)$ jusqu'à ce que la position longitudinale réelle Xr obtenue de l'aéronef suiveur par rapport à l' aéronef meneur soit supérieure au quatrième seuil Th4 prédéfini ;
- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est comprise dans un intervalle de valeurs entre le deuxième seuil Th2 prédéfini et un sixième seuil Th6 prédéfini, avec Xt<Th2+Xt<Th6+Xt avec Th6 positif, alors la loi de commande choisie est définie par : $SC_f = S_l + O_b$ au moins jusqu'à ce que la position longitudinale réelle Xr obtenue de l'aéronef suiveur soit inférieure à un cinquième seuil Th5 prédéfini, avec Th2≥Th5≥Xt avec Th5 positif ;
- si la différence Xt-Xr entre la position longitudinale réelle Xr obtenue de l'aéronef suiveur par rapport à l'aéronef meneur et la position longitudinale ciblée Xt de l'aéronef suiveur par rapport à l'aéronef meneur est supérieure au sixième seuil Th6 prédéfini, alors la loi de commande choisie est définie par : $SC_f = S_l + K_1 . (X_r - X_t) + K_2 . (S_l - S_f)$ jusqu'à ce que la position longitudinale réelle Xr obtenue de l'aéronef suiveur par rapport à l'aéronef meneur soit inférieure au cinquième seuil Th5 prédéfini ;

avec $O_f$ une constante positive prédéterminée, $K_1$ un premier coefficient de gain prédéfini, $K_2$ un deuxième coefficient de gain prédéfini, et $O_b$ une constante négative prédéterminée.

Selon un autre aspect, il est proposé un aéronef incluant le système informatique.

BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :

[Fig. 1] illustre schématiquement un aéronef suiveur et un aéronef meneur, l'aéronef suiveur comprenant un système informatique comprenant de la circuiterie électronique configurée pour implémenter une gestion de la position longitudinale d'au moins un aéronef suiveur suivant un aéronef meneur dans un vol en formation ;
[Fig. 2] illustre schématiquement le traitement d'un procédé de gestion de la position longitudinale d' au moins un aéronef suiveur suivant un aéronef meneur dans un vol en formation ;
[Fig. 3] illustre schématiquement le positionnement des différents seuils par rapport à la position longitudinale réelle d'un aéronef suiveur dans un procédé de gestion de la position longitudinale d' au moins un aéronef suiveur suivant un aéronef meneur dans un vol en formation ;
[Fig. 4] illustre schématiquement un agencement matériel d'un système informatique qui comprend de la circuiterie électronique pour implémenter une gestion de la position longitudinale d'au moins un aéronef suiveur suivant un aéronef meneur dans un vol en formation.

EXPOSE DETAILLE DE MODES DE REALISATION

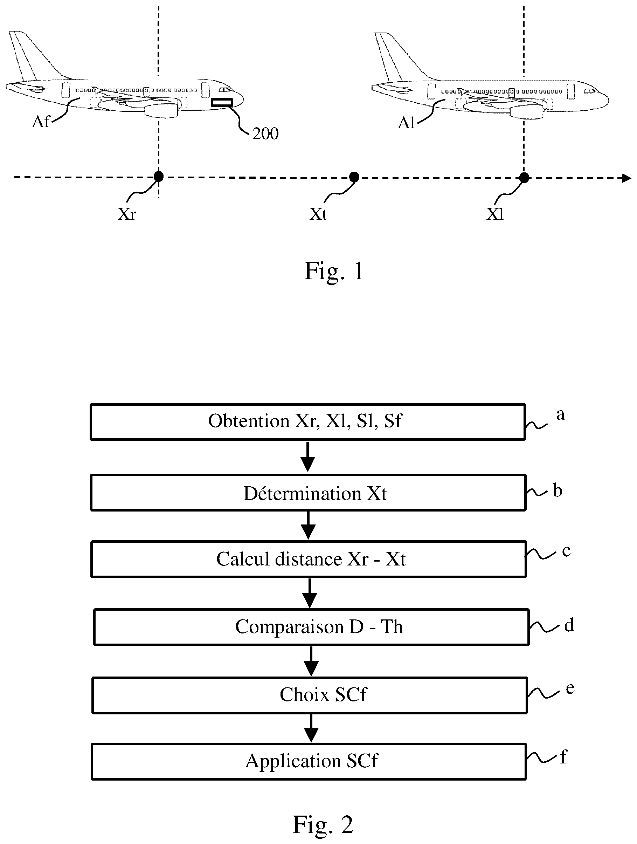

En référence à la Fig. 2, selon un premier aspect, il est proposé un procédé de gestion de la position d'au moins un aéronef suiveur Af suivant un aéronef meneur Al dans un vol en formation. Il est précisé que, par position longitudinale de l'aéronef suiveur Af par rapport à l'aéronef meneur Al, il est entendu un éloignement horizontal de l'aéronef suiveur Af par rapport à l'aéronef meneur Al dans un plan vertical passant par la position géographique en trois dimensions de l'aéronef suiveur Af et par la position géographique en trois dimensions de l'aéronef meneur Al. Une autre définition aussi opérante dans le cadre de la présente invention est que par position longitudinale de l'aéronef suiveur Af par rapport à l'aéronef meneur Al, il est entendu une projection orthogonale de la position géographique en trois dimensions de l'aéronef suiveur Af sur un axe correspondant à la direction suivie par l'aéronef meneur Al. Dans ce cas, l'attitude de l'aéronef suiveur Af est obtenue en temps réel afin de réaliser cette projection. Une autre définition aussi opérante dans le cadre de la présente invention est que, par position longitudinale de l'aéronef suiveur Af par rapport à l'aéronef meneur Al, il est entendu la distance linéaire entre l'aéronef suiveur Af et l'aéronef meneur Al, c'est-à-dire la distance qui sépare l'aéronef suiveur Af de l'aéronef meneur Al sur la droite qui relie la position géographique en trois dimensions de l'aéronef suiveur Af et la position géographique en trois dimensions de l'aéronef meneur Al.

Il est précisé que, par vol en formation, il est entendu une configuration de vol dans laquelle au moins deux aéronefs se suivent. Le premier aéronef (celui qui est situé devant l'autre) est dit aéronef meneur Al. Le deuxième aéronef (celui qui suit) est dit aéronef suiveur Af. Il est précisé qu'il est possible d'avoir des formations comprenant plus de deux aéronefs, dans lesquelles un aéronef suiveur Af d'un premier aéronef meneur Al est aussi un aéronef meneur Al d'un deuxième aéronef suiveur Af.

Le procédé comprend principalement les étapes suivantes :

(a) obtention d'une position Xl de l'aéronef meneur Al, d'une position longitudinale réelle Xr de l'aéronef suiveur Af par rapport à l'aéronef meneur Al, d'une vitesse de l'aéronef meneur Sl et d'une vitesse de l'aéronef suiveur Sf ;

(b) détermination d'une position longitudinale ciblée Xt de l'aéronef suiveur Af par rapport à la position de l'aéronef meneur Al ;

(c) calcul d'une différence D Xt-Xr entre la position longitudinale ciblée Xt de l'aéronef suiveur Af et la position longitudinale réelle Xr obtenue de l'aéronef suiveur Af ;

(d) comparaison de la valeur de la différence D avec au moins un seuil Th prédéfini ;

(e) choix d'une loi de commande SCf de la vitesse de l'aéronef suiveur Af, parmi au moins deux lois de commande SCf distinctes, en fonction de la comparaison ;

(f) application de la loi de commande SCf choisie pour gérer la position longitudinale réelle Xr de l'aéronef suiveur Af par rapport à la position de l'aéronef meneur Al.

Grâce à la définition d'au moins un seuil et au choix d'une loi de commande SCf de la vitesse de l'aéronef suiveur Af, parmi au moins deux lois de commande SCf distinctes, en fonction de la comparaison par rapport audit au moins un seuil, la gestion de la vitesse de l'aéronef suiveur Af est effectuée par paliers, ce qui évite des accélérations ou des décélérations parasitaires, ce qui permet un pilotage plus confortable pour des passagers de l'aéronef suiveur Af.

Le procédé de gestion comprend l'obtention de la position longitudinale réelle Xr de l'aéronef suiveur par rapport à l'aéronef meneur Al, de la position de l'aéronef meneur Al, de la vitesse de l'aéronef meneur Al et de la vitesse de l'aéronef suiveur Af.

Ces différentes valeurs de position et vitesse peuvent être acquises par des moyens connus intégrés dans chaque aéronef pour déterminer la position en question et la vitesse. Selon une autre disposition, ces valeurs peuvent être acquises par un système de surveillance au sol et/ou satellitaire. Une obtention hybride par les aéronefs eux-mêmes et par des systèmes de surveillance est aussi possible. Selon une disposition avantageuse, l'aéronef suiveur Af et l'aéronef meneur Al communiquent entre eux pour que l'aéronef suiveur Af obtienne de l'aéronef meneur Al ses valeurs de position et de vitesse.

Selon une autre disposition, un seul aéronef (par exemple l'aéronef suiveur Af) peut obtenir l'ensemble des valeurs. Dans ce cas, les valeurs correspondant à l'autre aéronef (par exemple à l'aéronef meneur Al dans le cas où les valeurs sont uniquement obtenues par l'aéronef suiveur Af) sont acquises et/ou calculées en utilisant des moyens de mesure connus, comme un système de positionnement et/ou un radar.

Il est aussi possible de calculer la vitesse de l'aéronef suiveur Af comme étant la dérivée par rapport au temps de la position longitudinale réelle Xr de l'aéronef suiveur Af. Il en va de même pour la vitesse de l'aéronef meneur Al qui peut être calculée à partir de la position de l'aéronef meneur Al, comme étant la dérivée par rapport au temps de la position de l'aéronef meneur Al.

Enfin, et tel que cela sera développé ci-après, il est possible de corriger d'éventuels biais relatifs lors de l'obtention de la vitesse de l'aéronef meneur Al.

Le procédé de gestion de la position longitudinale utilise la position longitudinale ciblée Xt de l'aéronef suiveur Af par rapport à l'aéronef meneur Al et la position longitudinale réelle Xr de l'aéronef suiveur Af par rapport à l'aéronef meneur Al.

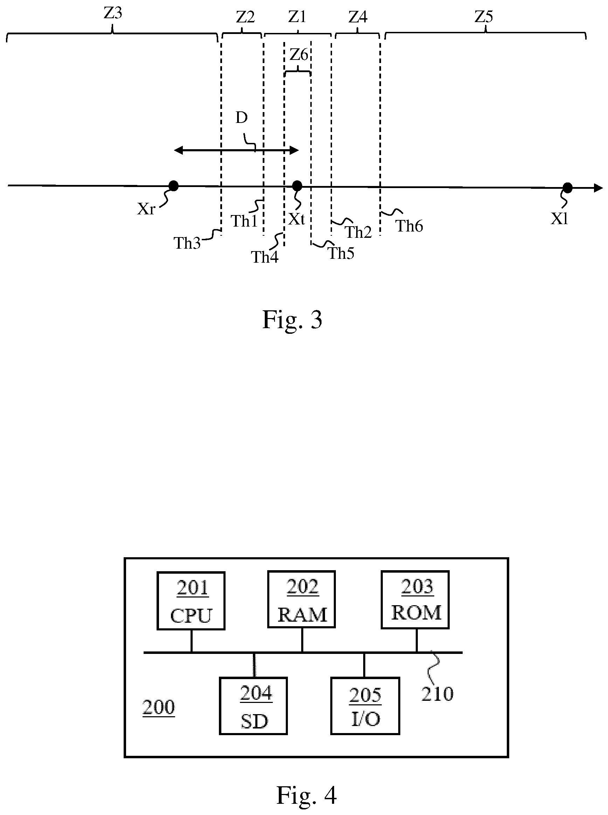

En référence à la Fig. 3, la position longitudinale ciblée Xt de l'aéronef suiveur Af par rapport à l'aéronef meneur Al est une position longitudinale à laquelle l'aéronef suiveur Af devrait se trouver pour réaliser un vol en formation efficace. Cette position longitudinale ciblée Xt est déterminée par rapport à la position de l'aéronef meneur Al. Typiquement, la position longitudinale ciblée Xt est déterminée de telle sorte que l'aéronef suiveur Af soit dans le sillage ascendant de l'aéronef meneur Al, à une distance de fonctionnement permettant de réaliser un vol en formation efficace.

En théorie, l'aéronef suiveur Af devrait se maintenir à la position longitudinale ciblée Xt par rapport à l'aéronef meneur Al. Or, en pratique, des différences de masses d'air traversées peuvent faire varier la position longitudinale réelle Xr de l'aéronef suiveur Af par rapport à la position longitudinale ciblée Xt de l'aéronef suiveur Af. En effet, certaines masses d'air ou des turbulences peuvent momentanément ralentir l'aéronef suiveur Af. Inversement, d'autres masses d'air peuvent accélérer l'aéronef suiveur Af.

D'une manière particulièrement astucieuse le procédé de gestion propose de piloter la vitesse de l'aéronef suiveur Af en utilisant des seuils de distance (différence) entre la position longitudinale ciblée Xt de l'aéronef suiveur Af et la position longitudinale réelle Xr de l'aéronef suiveur Af.

Ce pilotage par seuils Th permet de définir des zones, entre deux seuils Th dans lesquelles la loi de commande SCf de la vitesse de l'aéronef suiveur Af demeure sensiblement inchangée. De plus, tel que cela sera développé ci-après, la loi de commande SCf diffère en fonction de la zone dans laquelle se situe l'aéronef suiveur Af par rapport à la position longitudinale ciblée Xt de l'aéronef suiveur par rapport à l'aéronef meneur Al. En d'autres termes, les seuils Th permettent d'éviter des accélérations et décélérations incessantes pour recaler l'aéronef suiveur Af sur sa position longitudinale ciblée Xt. Ainsi, l'utilisation de seuils contribue à un pilotage fluide de la loi de commande de la vitesse de l'aéronef suiveur Af, ce qui améliore le confort des passagers de l'aéronef suiveur. En d'autres termes, l'utilisation de seuils contribue à un pilotage moins dynamique de la loi de commande de l'aéronef suiveur Af, par rapport aux systèmes et procédés de l'art antérieur.

En référence à la Fig. 3, schématiquement, les seuils Th définissent des zones Z de différence D Xt-Xr entre la position longitudinale réelle Xr de l'aéronef suiveur Af et la position longitudinale ciblée Xt de l'aéronef suiveur Af.

Selon le mode de réalisation ici présenté, le procédé de gestion utilise six seuils prédéfinis Th, identifiés de Th1 à Th6. Bien entendu il est possible d'utiliser une quantité différente de seuils Th.

Les seuils Th sont répartis en considérant la position longitudinale ciblée Xt de l'aéronef suiveur Af comme origine. Chaque seuil Th correspond à une distance par rapport à la position longitudinale ciblée Xt de l'aéronef suiveur Af. Le positionnement des seuils Th se fait selon un axe orienté allant de la position longitudinale ciblée Xt de l'aéronef suiveur Af vers la position de l'aéronef meneur Al. Ainsi, selon le mode de réalisation ici présenté, lorsque la position longitudinale réelle Xr de l'aéronef suiveur Af est comprise entre la position longitudinale ciblée Xt de l'aéronef suiveur Af par rapport à l'aéronef meneur Al et la position de l'aéronef meneur Al, alors la différence D Xt-Xr entre la position longitudinale ciblée Xt de l'aéronef suiveur Af et la position longitudinale réelle Xr de l'aéronef suiveur Af est exprimée positivement. Inversement, lorsque la distance entre la position longitudinale réelle Xr de l'aéronef suiveur Af et la position de l'aéronef meneur Al est supérieure à la différence D Xt-Xr entre la position longitudinale ciblée Xt de l'aéronef suiveur Af et la position longitudinale réelle Xr de l'aéronef suiveur Af par rapport à l'aéronef meneur Al, alors la différence D Xt-Xr entre la position longitudinale ciblée Xt de l'aéronef suiveur Af et la position longitudinale réelle Xr de l'aéronef suiveur Af est exprimée négativement.

Ainsi, selon le mode de réalisation ici présenté, le premier seuil Th1, le troisième seuil Th3 et le quatrième seuil Th4 correspondent à des positionnements auxquels l'aéronef suiveur Af est en retard par rapport à la position longitudinale ciblée Xt. Les valeurs de ces seuils Th sont donc exprimées négativement par rapport au point d'origine constitué de la position longitudinale ciblée Xt de l'aéronef suiveur Af. Une autre manière équivalente d'exprimer la position longitudinale de ces seuils Th est d'indiquer que la distance entre le premier seuil Th1, le troisième seuil Th3 et le quatrième seuil Th4, avec la position longitudinale de l'aéronef meneur Al est supérieure à la distance entre la position longitudinale ciblée Xt de l'aéronef suiveur Af par rapport à l'aéronef meneur Alet la position de l'aéronef meneur Al. Selon le mode de réalisation ici présenté, la distance entre le premier seuil Th1 et la position longitudinale ciblée Xt par rapport à l'aéronef meneur Alest plus importante que la distance entre le quatrième seuil Th4 et la position longitudinale ciblée. De plus, la distance entre le troisième seuil Th3 et la position longitudinale ciblée Xt par rapport à l'aéronef meneur Al est plus importante que la distance entre le premier seuil Th1 et la position longitudinale ciblée Xt. Ainsi par ordre du plus proche de la position longitudinale ciblée Xt au plus éloigné, ces seuils peuvent être classés comme suit : quatrième seuil Th4, puis premier seuil Th1, puis troisième seuil Th3.

De même, selon le mode de réalisation ici présenté, le deuxième seuil Th2, le sixième seuil Th6 et le cinquième seuil Th5 correspondent à des positionnements auxquels l'aéronef suiveur Af est en avance par rapport à la position longitudinale ciblée Xt. Les valeurs de ces seuils Th sont donc exprimées positivement par rapport au point d'origine constitué de la position longitudinale ciblée Xt de l'aéronef suiveur Af. Selon le mode de réalisation ici présenté, la distance entre le deuxième seuil Th2 et la position longitudinale ciblée Xt est plus importante que la distance entre le cinquième seuil Th5 et la position longitudinale ciblée. De plus, la distance entre le sixième seuil Th6 et la position longitudinale ciblée Xt est plus importante que la distance entre le deuxième seuil Th2 et la position longitudinale ciblée Xt. Ainsi par ordre du plus proche de la position longitudinale ciblée Xt au plus éloigné, ces seuils peuvent être classés comme suit : cinquième seuil Th5, puis premier seuil Th2, puis sixième seuil Th6.

Ainsi, selon le mode de réalisation proposé :
[Maths. 1] Th3<Th1<Th4 avec Th1, Th3 et Th4 négatifs. De plus selon le mode de réalisation proposé :

$$[\text{Maths. 2}]\ Th5 < Th2 < Th6$$

avec Th5, Th2 et Th6 positifs.

Une autre manière équivalente d'exprimer la position de ces seuils Th est d'indiquer que la distance entre le deuxième seuil Th2, le sixième seuil Th6 et le cinquième seuil Th5, avec la position longitudinale de l'aéronef meneur Al est inférieure à la distance entre la position longitudinale ciblée Xt de l'aéronef suiveur Af et la position de l'aéronef meneur Al.

Comme indiqué précédemment, les seuils Th permettent de découper, de créer des zones Z, de sectoriser, les différences entre la position longitudinale réelle Xr de l'aéronef suiveur Af et la position longitudinale ciblée Xt de l'aéronef suiveur Af.

Ainsi, tel que schématisé sur la Fig. 3, la position longitudinale ciblée Xt de l'aéronef suiveur Af est prédéterminée par rapport à la position Xl de l'aéronef meneur Al.

Une première zone Z1 est définie autour de la position longitudinale ciblée Xt de l'aéronef suiveur Af. Cette première zone Z1 est bornée par le premier seuil Th1 prédéfini et le deuxième seuil prédéfini Th2. En d'autres termes, cette première zone Z1 correspond à un intervalle de valeurs de différences D comprises entre le premier seuil Th1 prédéfini et le deuxième seuil prédéfini Th2.

Une deuxième zone Z2 est bornée par le premier seuil Th1 prédéfini et le troisième seuil Th3 prédéfini. En d'autres termes, cette deuxième zone Z2 correspond à un intervalle de valeurs négatives de différences D comprises entre le premier seuil Th1 prédéfini et le troisième seuil Th3 prédéfini. Tel que cela est schématisé sur la Fig. 3, la deuxième zone Z2 correspond à une zone de retard de la position longitudinale réelle Xr de l'aéronef suiveur Af par rapport à la position longitudinale ciblée Xt.

Une troisième zone Z3 est bornée par le troisième seuil Th3 prédéfini et s'étend potentiellement jusqu'à moins l'infini. En d'autres termes, cette troisième zone Z3 correspond aux valeurs négatives de différences D inférieures au troisième seuil Th3 prédéfini. Tel que cela est schématisé sur la Fig. 3 la troisième zone Z3 correspond à une zone de retard de la position longitudinale réelle Xr de l'aéronef suiveur Af par rapport à la position longitudinale ciblée Xt de l'aéronef suiveur Af. Selon l'exemple schématisé sur la Fig. 3, la position longitudinale réelle Xr de l'aéronef suiveur Af est dans la troisième zone Z3.

Une quatrième zone Z4 est bornée par le deuxième seuil Th2 prédéfini et le sixième seuil Th6 prédéfini. En d'autres termes, cette deuxième zone Z2 correspond à un intervalle de valeurs positives de différences D comprises entre le deuxième seuil Th2 prédéfini et le sixième seuil Th6 prédéfini. Tel que cela est schématisé sur la Fig. 3, la quatrième zone Z4 correspond à une zone d'avance de la position longitudinale réelle Xr de l'aéronef suiveur Af par rapport à la position longitudinale ciblée Xt.

Une cinquième zone Z5 est bornée par le sixième seuil Th6 prédéfini et s'étend potentiellement jusqu'à la position de l'aéronef meneur Al (à une marge de sécurité près). En d'autres termes, cette cinquième zone Z5 correspond aux valeurs positives de différences D Xt-Xr supérieures au sixième seuil prédéfini. Tel que cela est schématisé sur la Fig. 3, la cinquième zone Z5 correspond à une zone d'avance de la position longitudinale réelle Xr de l'aéronef suiveur Af par rapport à la position longitudinale ciblée Xt de l'aéronef suiveur Af.

Une sixième zone Z6 est définie autour de la position longitudinale ciblée Xt de l'aéronef suiveur Af. Cette sixième zone Z6 est bornée par le quatrième seuil Th4 prédéfini et un cinquième seuil Th5 prédéfini. En d'autres termes, cette sixième zone Z6 correspond à un intervalle de valeurs de différences D comprises entre le quatrième seuil Th4 prédéfini et le cinquième seuil prédéfini Th5. La sixième zone Z6 est comprise dans la première zone Z1.

Si la différence D Xt-Xr entre la position longitudinale réelle Xr obtenue de l'aéronef suiveur Af et la position longitudinale ciblée Xt obtenue de l'aéronef suiveur Af est comprise dans un intervalle de valeurs entre le premier seuil Th1 prédéfini et le deuxième seuil Th2 prédéfini, alors la loi de commande choisie est définie par :

$$[\text{Maths. 3}]\ SC_f = S_l,$$

avec $SC_f$ une commande de vitesse de l'aéronef suiveur Af, et $S_L$ la vitesse obtenue de l'aéronef meneur Al.

Ainsi, en d'autres termes, lorsque la position longitudinale réelle Xr de l'aéronef suiveur Af est dans la première zone Z1 autour de la position longitudinale ciblée Xt de l'aéronef suiveur Af alors la loi de commande SCf de vitesse appliquée revient à ce que la vitesse Sf de l'aéronef suiveur Af soit égale à la vitesse Sl de l'aéronef meneur Al, avec potentiellement une marge prédéfinie autour de la valeur de la vitesse Sl de l'aéronef meneur.

Si la différence D Xt-Xr entre la position longitudinale réelle Xr obtenue de l'aéronef suiveur Af et la position longitudinale ciblée Xt de l'aéronef suiveur Af est comprise dans un intervalle de valeurs entre le premier seuil Th1 prédéfini et le troisième seuil Th3 prédéfini, alors la loi de commande choisie SCf est définie par :

$$[\text{Maths. 4}]\ SC_f = S_l + O_f$$

avec, $SC_f$ une commande de vitesse de l'aéronef suiveur Af, $S_l$ la vitesse obtenue de l'aéronef meneur Al et $O_f$ une constante positive prédéterminée.

Ainsi, en d'autres termes, lorsque la position longitudinale réelle Xr de l'aéronef suiveur Af est dans la deuxième zone Z2, alors l'aéronef suiveur Af est en retard sur sa position longitudinale ciblée Xt. La loi de commande SCf choisie permet alors de combler le retard par l'adjonction d'une constante positive de rattrapage Of additionnée à la vitesse SI de l'aéronef meneur AI.

L'application de cette loi de commande SCf choisie permet à l'aéronef suiveur Af de rattraper son retard pour retourner dans la première zone Z1 et si possible sur la position longitudinale ciblée Xt de l'aéronef suiveur Af par rapport à l'aéronef meneur AI.

Pour garantir la fluidité du procédé de gestion, une hystérésis est préférentiellement introduite. En effet, cette loi de commande SCf est appliquée jusqu'à ce que la position longitudinale réelle Xr obtenue de l'aéronef suiveur Af soit comprise entre le quatrième seuil Th4 prédéfini et le cinquième seuil Th5 prédéfini.

En d'autres termes, la loi de commande SCf de vitesse choisie lorsque l'aéronef suiveur Af est dans la deuxième zone Z2 est appliquée au moins jusqu'à ce que l'aéronef suiveur Af pénètre dans la sixième zone Z6. Il en résulte que lorsque l'aéronef suiveur Af est dans la deuxième zone Z2, la loi de commande SCf choisie est appliquée au moins jusqu'à ce qu'il atteigne la sixième zone Z6 (ce qui signifie que l'aéronef suiveur Af traverse une partie de la première zone Z1 sans changer de loi de commande de vitesse).

Cette disposition permet de ramener l'aéronef suiveur Af au plus proche de la position longitudinale ciblée Xt de l'aéronef suiveur Af, avant de changer de loi de commande SCf. En d'autres termes, cela permet d'éviter un phénomène d'oscillation entre deux lois de commande si la loi de commande devait changer dès que l'aéronef suiveur Af pénétrait dans la première zone Z1. Ainsi, cette disposition permet elle aussi de réduire les fluctuations de consigne de vitesse et permet ainsi d'améliorer le confort des passagers de l'aéronef suiveur Af.

Si la différence D Xt-Xr entre la position longitudinale réelle Xr obtenue de l'aéronef suiveur Af et la position longitudinale ciblée Xt de l'aéronef suiveur Af est inférieure au troisième seuil Th3 prédéfini et ce, même si la loi de commande SCf de la zone Z2 a été engagée, alors la loi de commande SCf choisie est définie par :
[Maths. 5] $SC_f = S_I + K_1 \cdot (X_r - X_t) + K_2 \cdot (S_I - S_f)$, avec $SC_f$ une commande de vitesse de l'aéronef suiveur Af, $S_I$ la vitesse obtenue de l'aéronef meneur AI, $X_r$ la position longitudinale réelle Xr obtenue de l'aéronef suiveur Af, $X_t$ la position longitudinale ciblée Xt de l'aéronef suiveur Af, $K_1$ un premier coefficient de gain prédéfini, $K_2$ un deuxième coefficient de gain prédéfini, $S_I$ la vitesse obtenue de l'aéronef meneur AI, et $S_f$ la vitesse obtenue de l'aéronef suiveur Af.

Dans cette situation, lorsque l'aéronef suiveur Af est dans la troisième zone Z3, il doit rattraper un retard conséquent pour se rapprocher de la position longitudinale ciblée Xt de l'aéronef suiveur Af par rapport à l'aéronef meneur AI. L'application de cette loi de commande SCf de vitesse permet de rattraper rapidement le retard de l'aéronef suiveur Af.

Il est précisé que les valeurs des coefficients de gains K1 et K2 sont déterminées par une connaissance empirique du comportement des aéronefs en formation. Selon un mode de réalisation, le premier coefficient de gain K1 prédéfini peut être de l'ordre de $10^{-4}$ et le deuxième coefficient de gain K2 prédéfini peut être de l'ordre de $10^{-1}$. Il est précisé que ces valeurs du premier coefficient de gain K1 et du deuxième coefficient de gain K2 ont été déterminées pour des valeurs de position longitudinale et de distance exprimées en mètres et des valeurs de vitesses exprimées en mach. Selon d'autres exemples, il est envisageable d'utiliser d'autres unités pour les valeurs de positions longitudinales, et de distance, et pour les valeurs de vitesses, ce qui conduirait à des valeurs différentes pour le premier coefficient de gain K1 et pour le deuxième coefficient de gain K2.

L'application de cette loi de commande choisie permet à l'aéronef suiveur Af de rattraper son retard pour retourner dans la première zone Z1 et si possible sur la position longitudinale ciblée Xt de l'aéronef suiveur Af.

Pour garantir la fluidité du procédé de gestion, une hystérésis est préférentiellement introduite. En effet, cette loi de commande SCf est appliquée jusqu'à ce que la position longitudinale réelle Xr obtenue de l'aéronef suiveur Af par rapport à l'aéronef meneur AI soit comprise entre le quatrième seuil Th4 prédéfini et le cinquième seuil Th5 prédéfini autour de la position longitudinale ciblée Xt.

En d'autres termes, la loi de commande SCf de vitesse choisie lorsque l'aéronef suiveur Af est dans la troisième zone Z3 est appliquée jusqu'à ce que l'aéronef suiveur Af pénètre dans la sixième zone Z6. Il en résulte que lorsque l'aéronef suiveur Af est dans la troisième zone Z3, la loi de commande SCf choisie est appliquée jusqu'à ce qu'il atteigne la sixième zone Z6 (ce qui signifie que l'aéronef suiveur Af traverse la deuxième zone Z2 et une partie de la première zone Z1 sans changer de loi de commande de vitesse).

Cette disposition permet de ramener l'aéronef suiveur Af au plus proche de la position longitudinale ciblée Xt de l'aéronef suiveur Af par rapport à l'aéronef meneur AI, avant de changer de loi de commande SCf. En d'autres termes, cela permet d'éviter un phénomène d'oscillation entre deux lois de commande si la loi de commande devait changer dès que l'aéronef suiveur Af pénétrait dans la deuxième zone Z2 puis dans la première zone Z1. Ainsi, cette disposition permet elle aussi de réduire les fluctuations de consigne de vitesse et permet ainsi d'améliorer le confort des passagers de l'aéronef suiveur Af.

Si la différence D Xt-Xr entre la position longitudinale réelle Xr obtenue de l'aéronef suiveur Af et la position longitudinale ciblée Xt de l'aéronef suiveur Af est comprise dans un intervalle de valeurs entre le deuxième seuil Th2 prédéfini et le sixième seuil Th6 prédéfini, alors la loi de commande SCf choisie est définie par :

[Maths. 6] $SC_f = S_l + O_b$

avec, $SC_f$ une commande de vitesse de l'aéronef suiveur Af, $S_l$ la vitesse obtenue de l'aéronef meneur Al et $O_b$ une constante négative prédéterminée.

Ainsi, en d'autres termes, lorsque la position longitudinale réelle Xr de l'aéronef suiveur Af par rapport à l'aéronef meneur Al est dans la quatrième zone Z4, alors l'aéronef suiveur Af est en avance sur sa position longitudinale ciblée Xt par rapport à l'aéronef meneur Al. La loi de commande SCf choisie permet alors de réduire l'avance par l'adjonction d'une constante négative de rattrapage Ob additionnée à la vitesse SI de l'aéronef meneur Al. En d'autres termes la constante de rattrapage est soustraite à la vitesse de l'aéronef meneur Al pour déterminer la vitesse Sf de l'aéronef suiveur Af et ainsi le ralentir.

L'application de cette loi de commande SCf choisie permet à l'aéronef suiveur Af de réduire son avance pour retourner dans la première zone Z1 et si possible sur la position longitudinale ciblée Xt de l'aéronef suiveur Af par rapport à l'aéronef meneur Al.

Pour garantir la fluidité du procédé de gestion, une hystérésis est préférentiellement introduite. En effet, cette loi de commande SCf est appliquée au moins jusqu'à ce que la position longitudinale réelle Xr obtenue de l'aéronef suiveur Af soit comprise entre un quatrième seuil Th4 prédéfini et un cinquième seuil Th5 prédéfini autour de la position longitudinale ciblée Xt.

En d'autres termes, la loi de commande SCf de vitesse choisie lorsque l'aéronef suiveur Af est dans la quatrième zone Z4 est appliquée au moins jusqu'à ce que l'aéronef suiveur Af pénètre dans la sixième zone Z6. Il en résulte que lorsque l'aéronef suiveur Af est dans la quatrième zone Z4, la loi de commande SCf choisie est appliquée jusqu'à ce qu'il atteigne la sixième zone Z6 (ce qui signifie que l'aéronef suiveur Af traverse une partie de la première zone Z1 sans changer de loi de commande de vitesse).

Cette disposition permet de ramener l'aéronef suiveur Af au plus proche de la position longitudinale ciblée Xt de l'aéronef suiveur Af, avant de changer de loi de commande SCf. En d'autres termes, cela permet d'éviter un phénomène d'oscillation entre deux lois de commande si la loi de commande devait changer dès que l'aéronef suiveur Af pénétrait dans la première zone Z1. Ainsi, cette disposition permet elle aussi de réduire les fluctuations de consigne de vitesse et permet ainsi d'améliorer le confort des passagers de l'aéronef suiveur Af.

Si la différence D Xt-Xr entre la position longitudinale réelle Xr obtenue de l'aéronef suiveur Af et la position longitudinale ciblée Xt de l'aéronef suiveur Af est supérieure au sixième seuil Th6 prédéfini et ce, même si la loi de commande SCf de la zone Z4 a été engagée, alors la loi de commande SCf choisie est définie par : [Maths. 5] $SC_f = S_l + K_1 \cdot (X_r - X_t) + K_2 \cdot (S_l - S_f)$ avec, $SC_f$ une commande de vitesse de l'aéronef suiveur Af, $S_l$ la vitesse obtenue de l'aéronef meneur Al, $X_r$ la position longitudinale réelle Xr obtenue de l'aéronef suiveur Af par rapport à l'aéronef meneur Al, $X_t$ la position longitudinale ciblée de l'aéronef suiveur Af par rapport à l'aéronef meneur Al, $K_1$ un premier coefficient de gain prédéfini, $K_2$ un deuxième coefficient de gain prédéfini , $S_l$ la vitesse obtenue de l'aéronef meneur Al, et $S_f$ la vitesse obtenue de l'aéronef suiveur Af.

Dans cette situation, lorsque l'aéronef suiveur Af est dans la cinquième zone Z5, il doit réduire une avance conséquente pour se rapprocher de la position longitudinale ciblée de l'aéronef suiveur Af par rapport à l'aéronef meneur Al. L'application de cette loi de commande de vitesse permet de réduire rapidement l'avance de l'aéronef suiveur Af.

Il est précisé que les valeurs des coefficients de gains sont déterminées par une connaissance empirique du comportement des aéronefs en formation. Selon un mode de réalisation, le premier coefficient de gain K1 prédéfini peut être de l'ordre de $10^{-4}$ et le deuxième coefficient de gain K2 prédéfini peut être de l'ordre de $10^{-1}$. Il est précisé que ces valeurs du premier coefficient de gain K1 et du deuxième coefficient de gain K2 ont été déterminées pour des valeurs de positions et de distances exprimées en mètres et des valeurs de vitesses exprimées en mach. Selon d'autres exemples, il est envisageable d'utiliser d'autres unités pour les valeurs de positions et pour les valeurs de vitesses, ce qui conduirait à des valeurs différentes pour le premier coefficient de gain K1 et pour le deuxième coefficient de gain K2.

L'application de cette loi de commande choisie permet à l'aéronef suiveur Af de réduire son avance pour retourner dans la première zone et si possible sur la position longitudinale ciblée Xt de l'aéronef suiveur Af.

Pour garantir la fluidité du procédé de gestion, une hystérésis est préférentiellement introduite. En effet, cette loi de commande est appliquée jusqu'à ce que la position longitudinale réelle Xr obtenue de l'aéronef suiveur Af soit comprise entre le quatrième seuil Th4 prédéfini et le cinquième seuil Th5 prédéfini autour de la position longitudinale ciblée Xt.

En d'autres termes, la loi de commande SCf de vitesse choisie lorsque l'aéronef suiveur Af est dans la cinquième zone Z5 est appliquée jusqu'à ce que l'aéronef suiveur Af pénètre dans la sixième zone Z6. Il en résulte que lorsque l'aéronef suiveur Af est dans la cinquième zone Z5, la loi de commande SCf choisie est appliquée jusqu'à ce qu'il atteigne la sixième zone Z6 (ce qui signifie que l'aéronef suiveur Af traverse la quatrième zone Z4 une partie de la première zone Z1 sans changer de loi de commande de vitesse).

Cette disposition permet de ramener l'aéronef suiveur Af au plus proche de la position longitudinale ciblée Xt de l'aéronef suiveur Af par rapport à l'aéronef meneur Al, avant de changer de loi de commande. En d'autres termes, cela permet d'éviter un phénomène d'oscillation entre deux lois de commande si la loi de commande devait changer dès que l'aéronef suiveur Af pénétrait dans la quatrième zone Z4 puis dans la première zone Z1. Ainsi, cette disposition permet elle aussi de réduire les fluctuations de consigne de vitesse et permet ainsi d'améliorer le confort des passagers de l'aéronef suiveur Af.

Selon une disposition particulièrement avantageuse, la loi de commande SCf est conservée inchangée si

$$[\text{Maths. 5}] \quad |SC_f - PSC_f| < L_S,$$

avec $SC_f$ une commande de vitesse de l'aéronef suiveur Af, $PSC_f$ une précédente commande de vitesse de l'aéronef suiveur Af et $L_S$ un seuil de vitesse prédéfini.

En d'autres termes, la loi de commande SCf de vitesse est conservée inchangée si la valeur absolue de la différence entre une vitesse à appliquer et la vitesse actuelle (précédemment appliquée) est inférieure à un seuil prédéfini. Cette disposition permet d'éviter des accélérations ou décélérations parasitaires, afin d'améliorer le confort des passagers de l'aéronef suiveur Af. Ainsi, cette disposition permet elle aussi de réduire les fluctuations de consigne de vitesse et permet ainsi d'améliorer le confort des passagers de l'aéronef suiveur Af.

De plus selon une autre disposition particulièrement avantageuse, la loi de commande SCf de vitesse est modulée pour que la vitesse Sf de l'aéronef suiveur Af demeure au sein de la sixième zone Z6. La modulation de la loi de commande SCf peut aussi permettre de réduire le nombre de transitions entre la sixième zone Z6 et les autres zones.

De préférence, un filtre de Kalman est appliqué sur la différence entre la vitesse Sl obtenue de l'aéronef meneur Al et la vitesse Sf de l'aéronef suiveur, pour estimer un biais relatif sur la vitesse Sl obtenue de l'aéronef meneur Al.

Selon un autre mode de réalisation, une vitesse Sl de l'aéronef meneur Al est déterminée en combinant des basses fréquences d'une mesure d'un nombre de mach de l'aéronef meneur Al et des hautes fréquences d'une vitesse de l'aéronef meneur Al par rapport au sol. Cette disposition permet d'obtenir une vitesse Sl de l'aéronef meneur Al avec précision, face aux rapides variations de masses d'air et de turbulences.

Selon un autre aspect, il est proposé un produit programme d'ordinateur comprenant des instructions de code de programme pour exécuter le procédé de gestion, lorsque lesdites instructions sont exécutées par un processeur.

L'invention concerne aussi un support de stockage non transitoire sur lequel est stocké un programme d'ordinateur comprenant des instructions de code de programme pour exécuter le procédé de gestion, lorsque lesdites instructions sont lues depuis ledit support de stockage non transitoire et exécutées par un processeur.

Selon un autre aspect, l'invention concerne un système informatique 200 comprenant de la circuiterie électronique configurée pour implémenter une gestion de la position longitudinale d'au moins un aéronef suiveur Af suivant un aéronef meneur Al dans un vol en formation, la circuiterie électronique implémentant au moins les étapes suivantes :

(a) obtention d'une position de l'aéronef meneur Al, d'une position longitudinale réelle Xr de l'aéronef suiveur Af par rapport à l'aéronef meneur Al, d'une vitesse de l'aéronef meneur Al et d'une vitesse de l'aéronef suiveur Af ;

(b) détermination d'une position longitudinale ciblée Xt de l'aéronef suiveur Af par rapport à la position de l'aéronef meneur Al ;

(c) calcul d'une différence D Xt-Xr entre la position longitudinale ciblée Xt de l'aéronef suiveur Af et la position longitudinale réelle Xr obtenue de l'aéronef suiveur Af ;

(d) comparaison de la valeur de la différence D Xt-Xr avec au moins un seuil Th prédéfini;

(e) choix d'une loi de commande SCf de la vitesse de l'aéronef suiveur Af, parmi au moins deux lois de commande SCf distinctes, en fonction de la comparaison ;

(f) application de la loi de commande SCf choisie pour gérer la position longitudinale réelle Xr de l'aéronef suiveur Af par rapport à la position de l'aéronef meneur Al.

Le procédé implémenté par la circuiterie électronique peut être complété par d'autres étapes, comme divulgué plus haut, dans l'un quelconque des modes de réalisation évoqués.

Typiquement, le système informatique 200 peut présenter une architecture telle que schématisée sur la figure 4. Le système informatique 200 peut comporter, reliés par un bus de communication 210 : un processeur 201 ; une mémoire vive 202 ; une mémoire morte 203, par exemple de type ROM (« Read Only Memory » en langue anglo-saxonne) ou EEPROM (« Electrically-Erasable Programmable Read Only Memory » en langue anglo-saxonne) ; une unité de stockage 204, telle qu'un disque dur HDD (« Hard Disk Drive » en langue anglo-saxonne), ou un lecteur de support de stockage, tel qu'un lecteur de cartes SD (« Secure Digital » en langue anglo-saxonne) ; un gestionnaire d'interfaces d'entrées-sorties 205.

Le processeur 201 est capable d'exécuter des instructions chargées dans la mémoire vive 202 à partir de la mémoire morte 203, d'une mémoire externe, d'un support de stockage (tel qu'une carte SD), ou d'un réseau de communication. Lorsque le système informatique 200 est mis sous tension, le processeur 201 est capable de lire de la mémoire vive 202 des instructions et de les exécuter. Ces instructions forment un programme d'ordinateur causant l'implémentation, par le processeur 201, de tout ou partie du procédé de gestion de la position longitudinale de l'aéronef suiveur Af par rapport à l'aéronef meneur Al.

Tout ou partie des procédés et étapes décrits ci-avant peut ainsi être implémenté sous forme logicielle par exécution d'un ensemble d'instructions par une machine programmable, par exemple un processeur de type DSP (« Digital Signal Processor » en langue anglo-saxonne) ou un microcontrôleur, ou être implémenté sous forme matérielle par une machine ou un composant dédié, par exemple un composant FPGA (« Field Programmable Gate Array » en langue anglo-saxonne) ou ASIC (« Application-Specific Integrated Circuit » en langue anglo-saxonne). D'une manière générale, le système informatique 200 comporte de la circuiterie électronique adaptée et configurée pour implémenter, sous forme logicielle et/ou matérielle, les procédés et étapes décrits ci-avant en relation avec le système informatique 200 en question.

*Aéronef*

Selon un autre aspect, l'invention concerne un aéronef configuré pour être l'aéronef suiveur Af décrit ci-dessus et incluant le système informatique 200.

**Revendications**

1. Procédé de gestion de la position longitudinale d'au moins un aéronef suiveur (Af) suivant un aéronef meneur (Al) dans un vol en formation, le procédé étant **caractérisé en ce qu'**il comprend au moins les étapes suivantes :

   (a) obtention d'une position (Xl) de l'aéronef meneur (Al), d'une position longitudinale réelle Xr de l'aéronef suiveur (Af), d'une vitesse Sl de l'aéronef meneur (Al) et d'une vitesse Sf de l'aéronef suiveur (Af) ;
   (b) détermination d'une position longitudinale ciblée Xt de l'aéronef suiveur (Af) par rapport à la position longitudinale de l'aéronef meneur (Al), la position longitudinale ciblée correspondant à une distance linéaire ciblée entre l'aéronef suiveur et l'aéronef meneur ;
   (c) calcul d'une différence (D) Xt-Xr entre la position longitudinale ciblée Xt de l'aéronef suiveur (Af) par rapport à l'aéronef meneur (Al) et la position longitudinale réelle Xr obtenue de l'aéronef suiveur (Af) par rapport à l'aéronef meneur (Al) ;
   (d) comparaison de la valeur de la différence (D) Xt-Xr avec au moins un seuil prédéfini ;
   (e) choix d'une loi de commande SCf de la vitesse Sf de l'aéronef suiveur (Af), parmi au moins deux lois de commande SCf distinctes, en fonction de la comparaison,
le procédé étant **caractérisé en ce que** le choix de la loi de commande SCf est effectué comme suit :

   - si la différence (D) Xt-Xr entre la position longitudinale réelle Xr obtenue de l'aéronef suiveur (Af) par rapport à l'aéronef meneur (Al) et la position longitudinale ciblée Xt obtenue de l'aéronef suiveur (Af) par rapport à l'aéronef meneur (Al) est comprise dans un intervalle de valeurs entre un premier seuil Th1 prédéfini et un deuxième seuil Th2 prédéfini, avec Th1+Xt <Xt<Th2+Xt avec Th1 négatif et Th2 positif, alors la loi de commande SCf choisie est définie par : $SC_f = S_l$ ;
   - si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est comprise dans un intervalle de valeurs entre le premier seuil Th1 prédéfini et un troisième seuil Th3 prédéfini, avec Th3+Xt <Thl+Xt<Xt avec Th3 négatif, alors la loi de commande SCf choisie est définie *par :* $SC_f = S_l + O_f$, au moins jusqu'à ce que la position longitudinale réelle Xr obtenue de l'aéronef suiveur (Af) soit supérieure à un quatrième seuil Th4 prédéfini, avec Th1≤Th4≤Xt avec Th4 négatif ;
   - si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est inférieure au troisième seuil Th3 prédéfini, alors la loi de commande SCf choisie est définie par : $SC_f = S_l + K_1 . (X_r - X_t) + K_2 . (S_l - S_f)$ jusqu'à ce que la position longitudinale réelle Xr obtenue de l'aéronef suiveur (Af) par rapport à l'aéronef meneur (Al) soit supérieure au quatrième seuil Th4 prédéfini ;
   - si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est comprise dans un intervalle de valeurs entre le deuxième seuil Th2 prédéfini et un sixième seuil Th6 prédéfini, avec Xt<Th2+Xt<Th6+Xt avec Th6 positif, alors la loi de commande choisie est définie par : $SC_f = S_l + O_b$ au moins jusqu'à ce que la position longitudinale réelle Xr obtenue de l'aéronef suiveur (Af) soit inférieure à un cinquième seuil Th5 prédéfini, avec Th2≥Th5≥Xt avec Th5 positif ;
- si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est supérieure au sixième seuil Th6 prédéfini, alors la loi de commande choisie est définie par : $SC_f = S_l + K_1 . (X_r - X_t) + K_2 . (S_l - S_f)$ jusqu'à ce que la position longitudinale réelle Xr obtenue de l'aéronef suiveur (Af) par rapport à l'aéronef meneur (Al) soit inférieure au cinquième seuil Th5 prédéfini ; avec $O_f$ une constante positive prédéterminée, $K_1$ un premier coefficient de gain prédéfini, $K_2$ un deuxième coefficient de gain prédéfini, et $O_b$ une constante négative prédéterminée;

(f) application de la loi de commande SCf choisie pour gérer la position longitudinale réelle Xr de l'aéronef suiveur (Af) par rapport à la position de l'aéronef meneur (Al).

2. Procédé selon la revendication 1, dans lequel le premier seuil Th1, le deuxième seuil Th2, le quatrième seuil Th4 et le cinquième seuil Th5 sont définis par l'inégalité :

$$Th1 < Th4 < Xt < Th5 < Th2.$$

3. Procédé selon l'une quelconque des revendications 1 et 2, dans lequel la loi de commande est conservée inchangée si $|SC_f - PSC_f| < L_S$ avec $SC_f$ une commande de vitesse de l'aéronef suiveur (Af), $PSC_f$ une précédente commande de vitesse de l'aéronef suiveur (Af) et $L_S$ un seuil de vitesse prédéfini.

4. Procédé selon l'une quelconque des revendications 1 à 3, dans lequel un filtre de Kalman est appliqué sur la valeur de la différence entre la vitesse obtenue Sl de l'aéronef meneur (Al) et la vitesse Sf de l'aéronef suiveur (Af), pour estimer un biais relatif sur la vitesse obtenue de l'aéronef meneur (Al).

5. Procédé selon l'une quelconque des revendications 1 à 4, dans lequel une vitesse de l'aéronef meneur (Al) est déterminée en combinant des basses fréquences d'une mesure d'un nombre de mach de l'aéronef meneur (Al) et des hautes fréquences d'une vitesse de l'aéronef meneur (Al) par rapport au sol.

6. Produit programme d'ordinateur comprenant des instructions de code de programme pour exécuter le procédé de gestion selon l'une quelconque des revendications 1 à 5, lorsque lesdites instructions sont exécutées par un processeur.

7. Support de stockage non transitoire sur lequel est stocké un programme d'ordinateur comprenant des instructions de code de programme pour exécuter le procédé de gestion selon l'une quelconque des revendications 1 à 5, lorsque lesdites instructions sont lues depuis ledit support de stockage non transitoire et exécutées par un processeur.

8. Système informatique (200) comprenant de la circuiterie électronique configurée pour implémenter une gestion de la position longitudinale d'au moins un aéronef suiveur (Af) suivant un aéronef meneur (Al) dans un vol en formation, la circuiterie électronique implémentant au moins les étapes suivantes :

(a) obtention d'une position de l'aéronef meneur (Al), d'une position longitudinale réelle Xr de l'aéronef suiveur (Af) par rapport à l'aéronef meneur (Al), d'une vitesse Sl de l'aéronef meneur (Al) et d'une vitesse Sf de l'aéronef suiveur (Af) ;
(b) détermination d'une position longitudinale ciblée Xt de l'aéronef suiveur (Af) par rapport à la position longitudinale de l'aéronef meneur (Al) la position longitudinale ciblée correspondant à une distance linéaire ciblée entre l'aéronef suiveur et l'aéronef meneur ;
(c) calcul d'une différence (D) Xt-Xr entre la position longitudinale ciblée Xt de l'aéronef suiveur (Af) par rapport à l'aéronef meneur (Al) et la position longitudinale réelle Xr obtenue de l'aéronef suiveur (Af) par rapport à l'aéronef meneur (Al);
(d) comparaison de la valeur de la différence (D) Xt-Xr avec au moins un seuil prédéfini;
(e) choix d'une loi de commande de la vitesse de l'aéronef suiveur (Af), parmi au moins deux lois de commande distinctes, en fonction de la comparaison, le système étant **caractérisé en ce que** le choix de la loi de commande SCf est effectué comme suit :

- si la différence (D) Xt-Xr entre la position longitudinale réelle Xr obtenue de l'aéronef suiveur (Af) par rapport à l'aéronef meneur (Al)et la position longitudinale ciblée Xt obtenue de l'aéronef suiveur (Af) par rapport à l'aéronef meneur (Al) est comprise dans un intervalle de valeurs entre un premier seuil Th1 prédéfini et un deuxième seuil Th2 prédéfini, avec Th1+Xt <Xt<Th2+Xt avec Th1 négatif et Th2 positif, alors la loi de commande SCf choisie est définie par : $SC_f = S_i$;

- si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est comprise dans un intervalle de valeurs entre le premier seuil Th1 prédéfini et un troisième seuil Th3 prédéfini, avec Th3+Xt <Thl+Xt<Xt avec Th3 négatif, alors la loi de commande SCf choisie est définie *par : $SC_f = S_l + O_f$,* au moins jusqu'à ce que la position longitudinale réelle Xr obtenue de l'aéronef suiveur (Af) soit supérieure à un quatrième seuil Th4 prédéfini, avec Th1≤Th4≤Xt avec Th4 négatif ;

- si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est inférieure au troisième seuil Th3 prédéfini, alors la loi de commande SCf choisie est définie par : $SC_f = S_l + K_1 . (X_r - X_t) + K_2 . (S_l - S_f)$ jusqu'à ce que la position longitudinale réelle Xr obtenue de l'aéronef suiveur (Af) par rapport à l'aéronef meneur (Al) soit supérieure au quatrième seuil Th4 prédéfini ;

- si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est comprise dans un intervalle de valeurs entre le deuxième seuil Th2 prédéfini et un sixième seuil Th6 prédéfini, avec Xt<Th2+Xt<Th6+Xt avec Th6 positif, alors la loi de commande choisie est définie par : $SC_f = S_l + O_b$ au moins jusqu'à ce que la position longitudinale réelle Xr obtenue de l'aéronef suiveur (Af) soit inférieure à un cinquième seuil Th5 prédéfini, avec Th2≥Th5≥Xt avec Th5 positif ;

- si la différence (D) Xt-Xr entre la position longitudinale réelle Xr obtenue de l'aéronef suiveur (Af) par rapport à l'aéronef meneur (Al) et la position longitudinale ciblée Xt de l'aéronef suiveur (Af) par rapport à l'aéronef meneur (Al) est supérieure au sixième seuil Th6 prédéfini, alors la loi de commande choisie est définie par : $SC_f = S_l + K_1 . (X_r - X_t) + K_2 . (S_l - S_f)$ jusqu'à ce que la position longitudinale réelle Xr obtenue de l'aéronef suiveur (Af) par rapport à l'aéronef meneur (Al) soit inférieure au cinquième seuil Th5 prédéfini ; avec $O_f$ une constante positive prédéterminée, $K_1$ un premier coefficient de gain prédéfini, $K_2$ un deuxième coefficient de gain prédéfini, et $O_b$ une constante négative prédéterminée ;

(f) application de la loi de commande choisie pour gérer la position longitudinale réelle Xr de l'aéronef suiveur (Af) par rapport à la position de l'aéronef meneur (Al).

**9.** Aéronef (Af) incluant un système informatique selon la revendication 8.

**Patentansprüche**

**1.** Verfahren zur Verwaltung der Längsposition mindestens eines Folgeflugzeugs (Af), das einem Führungsflugzeug (Al) bei einem Formationsflug folgt, wobei das Verfahren **dadurch gekennzeichnet ist, dass** es mindestens die folgenden Schritte umfasst:

(a) Erhalten einer Position (Xl) des Führungsflugzeugs (Al), einer Ist-Längsposition Xr des Folgeflugzeugs (Af), einer Geschwindigkeit Sl des Führungsflugzeugs (Al) und einer Geschwindigkeit Sf des Folgeflugzeugs (Af),
(b) Ermitteln einer Soll-Längsposition Xt des Folgeflugzeugs (Af) in Bezug auf die Längsposition des Führungsflugzeugs (Al), wobei die Soll-Längsposition einem linearen Sollabstand zwischen dem Folgeflugzeug und dem Führungsflugzeug entspricht;
(c) Berechnen einer Differenz (D) Xt-Xr zwischen der Soll-Längsposition Xt des Folgeflugzeugs (Af) in Bezug auf das Führungsflugzeug (Al) und der erhaltenen Ist-Längsposition Xr des Folgeflugzeugs (Af) in Bezug auf das Führungsflugzeug (Al);
(d) Vergleichen des Werts der Differenz (D) Xt-Xr mit mindestens einem vorgegebenen Schwellenwert;
(e) Wahl eines Steuerungsgesetzes SCf für die Geschwindigkeit Sf des Folgeflugzeugs (Af) unter mindestens zwei verschiedenen Steuerungsgesetzen SCf in Abhängigkeit von dem Vergleich, wobei das Verfahren **dadurch gekennzeichnet ist, dass** die Wahl des Steuerungsgesetzes SCf wie folgt vorgenommen wird:

- wenn die Differenz (D) Xt-Xr zwischen der erhaltenen Ist-Längsposition Xr des Folgeflugzeugs (Af) in Bezug auf das Führungsflugzeug (Al) und der erhaltenen Soll-Längsposition Xt des Folgeflugzeugs (Af) in Bezug auf das Führungsflugzeug (Al) in einem Werteintervall zwischen einem ersten vorgegebenen Schwellenwert Th1 und einem zweiten vorgegebenen Schwellenwert Th2 liegt, wobei Th1+Xt <Xt<Th2+Xt, wobei Th1 negativ ist und Th2 positiv ist, dann wird das gewählte Steuerungsgesetz SCf definiert durch: $SC_f = S_l$,

- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) in einem Werteintervall zwischen dem ersten vorgegebenen Schwellenwert Th1 und einem dritten vorgegebenen Schwellenwert Th3 liegt, wobei Th3+Xt <Th1+Xt<Xt, wobei Th3 negativ ist, dann wird das gewählte Steuerungsgesetz SCf definiert durch: $SC_f = S_l + O_f$, mindestens, bis die erhaltene Ist-Längsposition Xr des Folgeflugzeugs (Af) größer als ein vierter vorgegebener Schwellenwert Th4 ist, wobei Th1≤Th4≤Xt, wobei Th4 negativ ist;

- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) kleiner als der dritte vorgegebene Schwellenwert Th3 ist, dann wird das gewählte Steuerungsgesetz SCf definiert durch: $SC_f = S_l + K_1 \cdot (X_r - X_t) + K_2 \cdot (S_L - S_f)$, bis die erhaltene Ist-Längsposition Xr des Folgeflugzeugs (Af) in Bezug auf das Führungsflugzeug (Al) größer als der vierte vorgegebene Schwellenwert Th4 ist;

- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) in einem Werteintervall zwischen dem zweiten vorgegebenen Schwellenwert Th2 und einem sechsten vorgegebenen Schwellenwert Th6 liegt, wobei Xt<Th2+Xt<Th6+Xt, wobei Th6 positiv ist, dann wird das gewählte Steuerungsgesetz SCf definiert durch: $SC_f = S_l + O_b$, mindestens, bis die erhaltene Ist-Längsposition Xr des Folgeflugzeugs (Af) kleiner als ein fünfter vorgegebener Schwellenwert Th5 ist, wobei Th2≥Th5≥Xt, wobei Th5 positiv ist;

- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) größer als der sechste vorgegebene Schwellenwert Th6 ist, dann wird das gewählte Steuerungsgesetz definiert durch: $SC_f = S_l + K_1 \cdot (X_r - X_t) + K_2 \cdot (S_L - S_f)$, bis die erhaltene Ist-Längsposition Xr des Folgeflugzeugs (Af) in Bezug auf das Führungsflugzeug (Al) kleiner als der fünfte vorgegebene Schwellenwert Th5 ist; wobei $O_f$ eine vorbestimmte positive Konstante ist, $K_1$ ein erster vorgegebener Verstärkungskoeffizient ist, $K_2$ ein zweiter vorgegebener Verstärkungskoeffizient ist und $O_b$ eine vorbestimmte negative Konstante ist;

(f) Anwenden des gewählten Steuerungsgesetzes SCf zum Verwalten der Ist-Längsposition Xr des Folgeflugzeugs (Af) in Bezug auf die Position des Führungsflugzeugs (Al).

2. Verfahren nach Anspruch 1, wobei der erste Schwellenwert Th1, der zweite Schwellenwert Th2, der vierte Schwellenwert Th4 und der fünfte Schwellenwert Th5 durch die folgende Ungleichheit definiert sind: Th1<Th4<Xt<Th5<Th2.

3. Verfahren nach einem der Ansprüche 1 und 2, wobei das Steuerungsgesetz unverändert bleibt, wenn $|SC_f - PSC_f| < L_S$, wobei $SC_f$ eine Geschwindigkeitssteuerung des Folgeflugzeugs (Af) ist, $PSC_f$ eine vorhergehende Geschwindigkeitssteuerung des Folgeflugzeugs (Af) ist und $L_S$ ein vorgegebener Geschwindigkeitsschwellenwert ist.

4. Verfahren nach einem der Ansprüche 1 bis 3, wobei ein Kalman-Filter auf den Wert der Differenz zwischen der erhaltenen Geschwindigkeit Sl des Führungsflugzeugs (Al) und der Geschwindigkeit Sf des Folgeflugzeugs (Af) angewandt wird, um ein Bias bezüglich der erhaltenen Geschwindigkeit des Führungsflugzeugs (Al) zu schätzen.

5. Verfahren nach einem der Ansprüche 1 bis 4, wobei eine Geschwindigkeit des Führungsflugzeugs (Al) ermittelt wird, indem niedrige Frequenzen einer Messung einer Mach-Zahl des Führungsflugzeugs (Al) und hohe Frequenzen einer Geschwindigkeit des Führungsflugzeugs (Al) in Bezug auf den Boden kombiniert werden.

6. Computerprogrammprodukt, das Programmcodeanweisungen umfasst, um bei der Ausführung der Anweisungen durch einen Prozessor das Verfahren zur Verwaltung nach einem der Ansprüche 1 bis 5 auszuführen.

7. Nichtflüchtiges Speichermedium, auf dem ein Computerprogramm gespeichert ist, das Programmcodeanweisungen umfasst, um beim Lesen der Anweisungen von dem nichtflüchtigen Speichermedium und Ausführen durch einen Prozessor das Verfahren zur Verwaltung nach einem der Ansprüche 1 bis 5 auszuführen.

8. Informationssystem (200), das eine elektronische Schaltungsanordnung umfasst, die dazu ausgestaltet ist, eine Verwaltung der Längsposition mindestens eines Folgeflugzeugs (Af), das einem Führungsflugzeug (Al) bei einem Formationsflug folgt, zu implementieren, wobei die elektronische Schaltungsanordnung mindestens die folgenden Schritte implementiert:

(a) Erhalten einer Position des Führungsflugzeugs (Al), einer Ist-Längsposition Xr des Folgeflugzeugs (Af) in Bezug auf das Führungsflugzeug (Al), einer Geschwindigkeit Sl des Führungsflugzeugs (Al) und einer Geschwindigkeit Sf des Folgeflugzeugs (Af);

(b) Ermitteln einer Soll-Längsposition Xt des Folgeflugzeugs (Af) in Bezug auf die Längsposition des Führungsflugzeugs (Al), wobei die Soll-Längsposition einem linearen Sollabstand zwischen dem Folgeflugzeug und dem Führungsflugzeug entspricht;

(c) Berechnen einer Differenz (D) Xt-Xr zwischen der Soll-Längsposition Xt des Folgeflugzeugs (Af) in Bezug auf das Führungsflugzeug (Al) und der erhaltenen Ist-Längsposition Xr des Folgeflugzeugs (Af) in Bezug auf das Führungsflugzeug (Al);

(d) Vergleichen des Werts der Differenz (D) Xt-Xr mit mindestens einem vorgegebenen Schwellenwert;

(e) Wählen eines Steuerungsgesetzes für die Geschwindigkeit des Folgeflugzeugs (Af) unter mindestens zwei verschiedenen Steuerungsgesetzen in Abhängigkeit von dem Vergleich, wobei das System **dadurch gekennzeichnet ist, dass** die Wahl des Steuerungsgesetzes SCf wie folgt vorgenommen wird:

- wenn die Differenz (D) Xt-Xr zwischen der erhaltenen Ist-Längsposition Xr des Folgeflugzeugs (Af) in Bezug auf das Führungsflugzeug (Al) und der erhaltenen Soll-Längsposition Xt des Folgeflugzeugs (Af) in Bezug auf das Führungsflugzeug (Al) in einem Werteintervall zwischen einem ersten vorgegebenen Schwellenwert Th1 und einem zweiten vorgegebenen Schwellenwert Th2 liegt, wobei Th1+Xt <Xt<Th2+Xt, wobei Th1 negativ ist und Th2 positiv ist, dann wird das gewählte Steuerungsgesetz SCf definiert durch: $SC_f = S_l$,
- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) in einem Werteintervall zwischen dem ersten vorgegebenen Schwellenwert Th1 und einem dritten vorgegebenen Schwellenwert Th3 liegt, wobei Th3+Xt <Th1+Xt<Xt, wobei Th3 negativ ist, dann wird das gewählte Steuerungsgesetz SCf definiert durch: $SC_f = S_l + O_f$, mindestens, bis die erhaltene Ist-Längsposition Xr des Folgeflugzeugs (Af) größer als ein vierter vorgegebener Schwellenwert Th4 ist, wobei Th1≤Th4≤Xt, wobei Th4 negativ ist;
- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) kleiner als der dritte vorgegebene Schwellenwert Th3 ist, dann wird das gewählte Steuerungsgesetz SCf definiert durch: $SC_f = S_l + K_1 \cdot (X_r - X_t) + K_2 \cdot (S_L - S_f)$, bis die erhaltene Ist-Längsposition Xr des Folgeflugzeugs (Af) in Bezug auf das Führungsflugzeug (Al) größer als der vierte vorgegebene Schwellenwert Th4 ist;
- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) in einem Werteintervall zwischen dem zweiten vorgegebenen Schwellenwert Th2 und einem sechsten vorgegebenen Schwellenwert Th6 liegt, wobei Xt<Th2+Xt<Th6+Xt, wobei Th6 positiv ist, dann wird das gewählte Steuerungsgesetz SCf definiert durch: $SC_f = S_l + O_b$, mindestens, bis die erhaltene Ist-Längsposition Xr des Folgeflugzeugs (Af) kleiner als ein fünfter vorgegebener Schwellenwert Th5 ist, wobei Th2≥Th5≥Xt, wobei Th5 positiv ist;
- wenn die Differenz (D) Xt-Xr zwischen der erhaltenen Ist-Längsposition Xr des Folgeflugzeugs (Af) in Bezug auf das Führungsflugzeug (Al) und der Soll-Längsposition Xt des Folgeflugzeugs (Af) in Bezug auf das Führungsflugzeug (Al) größer als der sechste vorgegebene Schwellenwert Th6 ist, dann wird das gewählte Steuerungsgesetz definiert durch: $SC_f = S_l + K_1 \cdot (X_r - X_t) + K_2 \cdot (S_L - S_f)$, bis die erhaltene Ist-Längsposition Xr des Folgeflugzeugs (Af) in Bezug auf das Führungsflugzeug (Al) kleiner als der fünfte vorgegebene Schwellenwert Th5 ist; wobei $O_f$ eine vorbestimmte positive

Konstante ist, $K_1$ ein erster vorgegebener Verstärkungskoeffizient ist, $K_2$ ein zweiter vorgegebener Verstärkungskoeffizient ist und $O_b$ eine vorbestimmte negative Konstante ist;

(f) Anwenden des gewählten Steuerungsgesetzes zum Verwalten der Ist-Längsposition Xr des Folgeflugzeugs (Af) in Bezug auf die Position des Führungsflugzeugs (Al).

9. Flugzeug (Af) mit einem Informationssystem nach Anspruch 8.

**Claims**

1. Method for managing the longitudinal position of at least one follower aircraft (Af) following a leader aircraft (Al) in a formation flight, the method being **characterized in that** it comprises at least the following steps:

   (a) obtaining a position (Xl) of the leader aircraft (Al), a real longitudinal position Xr of the follower aircraft (Af), a speed Sl of the leader aircraft (Al) and a speed Sf of the follower aircraft (Af);
   (b) determining a target longitudinal position Xt of the follower aircraft (Af) with respect to the longitudinal position of the leader aircraft (Al), the target longitudinal position corresponding to a target linear distance between the follower aircraft and the leader aircraft;
   (c) calculating a difference (D) Xt-Xr between the target longitudinal position Xt of the follower aircraft (Af) with respect to the leader aircraft (Al) and the obtained real longitudinal position Xr of the follower aircraft (Af) with respect to the leader aircraft (Al);
   (d) comparing the value of the difference (D) Xt-Xr with at least one predefined threshold;
   (e) choosing a control law SCf for controlling the speed Sf of the follower aircraft (Af), from among at least two separate control laws SCf, on the basis of the comparison, the method being **characterized in that** the control law SCf is chosen as follows:

   - if the difference (D) Xt-Xr between the obtained real longitudinal position Xr of the follower aircraft (Af) with respect to the leader aircraft (Al) and the obtained target longitudinal position Xt of the follower aircraft (Af) with respect to the leader aircraft (Al) is within an interval of values between a first predefined threshold Th1 and a second predefined threshold Th2, with Th1+Xt <Xt<Th2+Xt, with Th1 being negative and Th2 being positive, then the chosen control law SCf is defined by: $SC_f = S_l$;
   - if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is within an interval of values between the first predefined threshold Th1 and a third predefined threshold Th3, with Th3+Xt <Th1+Xt<Xt, with Th3 being negative, then the chosen control law SCf is defined by: $SC_f = S_l + O_f$, at least until the obtained real longitudinal position Xr of the follower aircraft (Af) is greater than a fourth predefined threshold Th4, with Th1≤Th4≤Xt, with Th4 being negative;
   - if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is less than the third predefined threshold Th3, then the chosen control law SCf is defined by: $SC_f = S_l + K_1 \cdot (X_r - X_t) + K_2 \cdot (S_l - S_f)$ until the obtained real longitudinal position Xr of the follower aircraft (Af) with respect to the leader aircraft (Al) is greater than the fourth predefined threshold Th4;
   - if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is within an interval of values between the second predefined threshold Th2 and a sixth predefined threshold Th6, with Xt<Th2+Xt<Th6+Xt, with Th6 being positive, then the chosen control law is defined by: $SC_f = S_l + O_b$, at least until the obtained real longitudinal position Xr of the follower aircraft (Af) is less than a fifth predefined threshold Th5, with Th2≥Th5≥Xt, with Th5 being positive;
   - if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is greater than the sixth predefined threshold Th6, then the chosen control law is defined by: $SC_f = S_l + K_1 \cdot (X_r - X_t) + K_2 \cdot (S_l - S_f)$ until the obtained real longitudinal position Xr of the follower aircraft (Af) with respect to the leader aircraft (Al) is less than the fifth predefined threshold Th5;

with $O_f$ being a predetermined positive constant, $K_1$ being a first predefined gain coefficient, $K_2$ being a second predefined gain coefficient, and $O_b$ being a predetermined negative constant;

(f) applying the chosen control law SCf so as to manage the real longitudinal position Xr of the follower aircraft (Af) with respect to the position of the leader aircraft (Al).

2. Method according to Claim 1, wherein the first threshold Th1, the second threshold Th2, the fourth threshold Th4 and the fifth threshold Th5 are defined by the inequality: Th1<Th4<Xt<Th5<Th2.

3. Method according to either one of Claims 1 and 2, wherein the control law is kept unchanged if $|SC_f - PSC_f| < L_S$ with $SC_f$ being a speed command for the follower aircraft (Af), $PSC_f$ being a previous speed command for the follower aircraft (Af) and $L_S$ being a predefined speed threshold.

4. Method according to any one of Claims 1 to 3, wherein a Kalman filter is applied to the value of the difference between the obtained speed Sl of the leader aircraft (Al) and the speed Sf of the follower aircraft (Af) in order to estimate a relative bias on the obtained speed of the leader aircraft (Al).

5. Method according to any one of Claims 1 to 4, wherein a speed of the leader aircraft (Al) is determined by combining low frequencies of a measurement of a Mach number of the leader aircraft (Al) and high frequencies of a ground speed of the leader aircraft (Al).

6. Computer program product comprising program code instructions for executing the management method according to any one of Claims 1 to 5 when said instructions are executed by a processor.

7. Non-transient storage medium on which there is stored a computer program comprising program code instructions for executing the management method according to any one of Claims 1 to 5 when said instructions are read from said non-transient storage medium and executed by a processor.

8. Computing system (200) comprising electronic circuitry configured to implement management of the longitudinal position of at least one follower aircraft (Af) following a leader aircraft (Al) in a formation flight, the electronic circuitry implementing at least the following steps:

(a) obtaining a position of the leader aircraft (Al), a real longitudinal position Xr of the follower aircraft (Af) with respect to the leader aircraft (Al), a speed Sl of the leader aircraft (Al) and a speed Sf of the follower aircraft (Af);
(b) determining a target longitudinal position Xt of the follower aircraft (Af) with respect to the longitudinal position of the leader aircraft (Al), the target longitudinal position corresponding to a target linear distance between the follower aircraft and the leader aircraft;
(c) calculating a difference (D) Xt-Xr between the target longitudinal position Xt of the follower aircraft (Af) with respect to the leader aircraft (Al) and the obtained real longitudinal position Xr of the follower aircraft (Af) with respect to the leader aircraft (Al);
(d) comparing the value of the difference (D) Xt-Xr with at least one predefined threshold;
(e) choosing a control law for controlling the speed of the follower aircraft (Af), from among at least two separate control laws, on the basis of the comparison,
the system being **characterized in that** the control law SCf is chosen as follows:

- if the difference (D) Xt-Xr between the obtained real longitudinal position Xr of the follower aircraft (Af) with respect to the leader aircraft (Al) and the obtained target longitudinal position Xt of the follower aircraft (Af) with respect to the leader aircraft (Al) is within an interval of values between a first predefined threshold Th1 and a second predefined threshold Th2, with Th1+Xt <Xt<Th2+Xt, with Th1 being negative and Th2 being positive, then the chosen control law SCf is defined by: $SC_f = S_l$;
- if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is within an interval of values between the first predefined threshold Th1 and a third predefined threshold Th3, with Th3+Xt <Th1+Xt<Xt, with Th3 being negative, then the chosen control law SCf is defined by: SCf = S) + Of, at least until the obtained real longitudinal position Xr of the follower aircraft (Af) is greater than a fourth predefined threshold Th4, with Th1≤Th4≤Xt, with Th4 being negative;
- if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is less than the third predefined threshold Th3, then the chosen control law SCf is defined by: $SC_f = S_l + K_1 \cdot (X_r - X_t) + K_2 \cdot (S_l - S_f)$ until the obtained real longitudinal position Xr of the follower aircraft (Af) with respect to the leader aircraft (Al) is greater than the fourth predefined threshold Th4;

- if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is within an interval of values between the second predefined threshold Th2 and a sixth predefined threshold Th6, with Xt<Th2+Xt<Th6+Xt, with Th6 being positive, then the chosen control law is defined by: $SC_f = S_l + O_b$, at least until the obtained real longitudinal position Xr of the follower aircraft (Af) is less than a fifth predefined threshold Th5, with Th2≥Th5≥Xt, with Th5 being positive;

- if the difference (D) Xt-Xr between the obtained real longitudinal position Xr of the follower aircraft (Af) with respect to the leader aircraft (Al) and the target longitudinal position Xt of the follower aircraft (Af) with respect to the leader aircraft (Al) is greater than the sixth predefined threshold Th6, then the chosen control law is defined by: $SC_f = S_l + K_1 \cdot (X_r - X_t) + K_2 \cdot (S_l - S_f)$ until the obtained real longitudinal position Xr of the follower aircraft (Af) with respect to the leader aircraft (Al) is less than the fifth predefined threshold Th5; with Of being a predetermined positive constant, Kr being a first predefined gain coefficient, K2 being a second predefined gain coefficient, and Ob being a predetermined negative constant;

(f) applying the chosen control law so as to manage the real longitudinal position Xr of the follower aircraft (Af) with respect to the position of the leader aircraft (Al).

9. Aircraft (Af) including a computing system according to Claim 8.

Af

200

Xr          Xt          Xl

## Fig. 1

| Obtention Xr, Xl, Sl, Sf | a |
| Détermination Xt | b |
| Calcul distance Xr - Xt | c |
| Comparaison D - Th | d |
| Choix SCf | e |
| Application SCf | f |

## Fig. 2

Fig. 3

Fig. 4

**EP 4 293 469 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2442201 A2